(19) **Europäisches Patentamt European Patent Office Office européen des brevets**

(11) **EP 1 884 761 B1**

(12) **FASCICULE DE BREVET EUROPEEN**

(45) Date de publication et mention de la délivrance du brevet:
**04.05.2011 Bulletin 2011/18**

(51) Int Cl.:
***G01N 1/00*** *(2006.01)* ***G01N 33/00*** *(2006.01)*

(21) Numéro de dépôt: **07113464.7**

(22) Date de dépôt: **30.07.2007**

(54) **Système de prélèvement et d'analyse de gaz**

Gasentnahme- und -analysesystem

System for sampling and analysing gas

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **01.08.2006 FR 0653232**

(43) Date de publication de la demande:
**06.02.2008 Bulletin 2008/06**

(73) Titulaire: **Alcatel Lucent
75008 Paris (FR)**

(72) Inventeurs:
- **Foray, Jean-Marie
  74000 Annecy (FR)**
- **Godot, Erwan
  74000 Annecy (FR)**

(74) Mandataire: **Croonenbroek, Thomas Jakob
  Cabinet Innovincia
  11, avenue des Tilleuls
  74200 Thonon-les-Bains (FR)**

(56) Documents cités:
**DE-A1- 3 718 224 DE-U1-202005 017 612
FR-A- 1 515 676 US-A- 4 042 333**

## Description

La présente invention se rapporte à un système de prélèvement et d'analyse de gaz comprenant un organe permettant le prélèvement d'un échantillon gazeux dans un volume restreint contenu dans une enceinte à atmosphère contrôlée en vue de son analyse.

Les systèmes d'analyse de gaz connus prélèvent un flux déterminé de mélange gazeux à la sortie d'une enceinte pour l'analyser, La plupart des analyseurs usuellement utilisés pour détecter la présence de trace de gaz (de l'ordre du ppm) comportent des petites pompes d'échantillonnage. Ces pompes ne fonctionnent correctement que dans des conditions données de pression et de flux d'entrée en n'admettant que des variations limitées de la valeur de ces paramètres :

$$Q \text{ (flux)} = S \text{ (vitesse de pompage)} * P \text{ (pression)}$$

C'est le cas par exemple pour les spectromètres à mobilité ionique (IMS) qui ne fonctionnent qu'à une pression de l'ordre de la pression atmosphérique (entre 700 et 1150 hPa).

Le prélèvement d'un échantillon .aux fins d'analyse dans une enceinte de faible volume entraîne une diminution de la pression à l'intérieur de l'enceinte, et donc une impossibilité de poursuivre la mesure puisque rapidement les échantillons prélevés ensuite seront à une pression inférieure à la pression nécessaire pour permettre à l'analyseur de faire une mesure. En outre la pression à l'intérieur de l'enceinte est variable, en diminution constante au fur et à mesure des prélèvements,

Pour pallier cette chute de pression, il a été proposé d'injecter dans l'enceinte un gaz neutre, simultanément au prélèvement, afin d'y maintenir une pression sensiblement constante et proche de la pression atmosphérique. Il devient alors possible d'effectuer la mesure sur plusieurs échantillons successifs. Cependant cette injection entraîne une dilution du gaz à analyser, et par conséquent dégrade la qualité de la mesure. Cette solution ne peut pas être mise en oeuvre pour la mesure d'échantillons gazeux présents en très faible quantité, pour lesquels on doit au contraire garantir) absolument l'étanchéité parfaite de l'enceinte qui les contient. D'autre part, il n'est pas envisageable d'augmenter le volume de l'enceinte contenant l'échantillon à analyser afin d'avoir un flux ou une pression constante sur ure durée plus longue. En effet un volume plus grand engendre également la dilution des espèces gazeuses à analyser.

Le document US-4,042,333 décrit un procédé pour mesurer par une méthode photométrique la présence d'une très faible concentration de NOx dans un gaz. Le problème posé est d'améliorer la sensibilité de la mesure pour des faibles concentrations. La solution consiste à comprimer l'échantillon de gaz de manière à augmenter la densité de présence des molécules à détecter.

L'échantillon gazeux est envoyé dans une cellule d'échantillonnage d'un volume donné dans laquelle il se trouve à pression déjà élevée, par exemple à pression atmosphérique. La cellule d'échantillonnage est précédée d'un long tube mince, contenant également l'échantillon, et dont le volume est supérieur à celui de la cellule, Au moment d'effectuer la mesure, on introduît dans le tube un autre gaz, sans effet sur la mesure, à une pression telle qu'il exerce une force sur l'échantillon à analyser pour le chasser du tube vers la cellule d'échantillonnage en augmentant ainsi sa pression.

La solution proposée est complexe car elle nécessite deux étapes dans le prélèvement : la première au cours de laquelle un échantillon gazeux est isolé, suivie d'une seconde étape au cours de laquelle cet échantillon gazeux est comprimé.

Le document US-2004/0,035,183 décrit un dispositif pour l'analyse de gaz par chromatographie ou spectrométrie. Le procédé comprend le prélèvement d'un échantillon de gaz, par exemple à pression atmosphérique, suivi de sa compression.

Le dispositif comprend une vanne d'accès multi-positions respectivement reliée à une pompe pour prélever l'échantillon à analyser, à une boucle d'échantillonnage recevant l'échantillon, à une vanne de compression associée à une réserve de gaz porteur sous pression, et à un analyseur. Lorsque la vanne d'accès est en position d'échantillonnage, la pompe envoie le flux gazeux dans la boude et le gaz porteur est envoyé directement à l'analyseur. En position d'injection, le gaz porteur est introduit dans la boucle et pousse l'échantillon de gaz vers l'analyseur.

Ce procédé se décompose également en deux étapes, l'une de prélèvement et la seconde de compression. La première étape comporte en plus une pompe de prélèvement qui attire l'échantillon vers la boucle d'échantillonnage, avant que l'échantillon ne soit comprimé par les moyens dé compression pneumatiques.

Le document DE-37 18 224 propose également un dispositif pour isoler et prélever un échantillon de gaz afin de l'envoyer dans la boucle d'un analyseur de gaz.

Le document DE-20 2005 017 612 U décrit un système d'analyse de gaz permettant d'envoyer un effluent gazeux vers un analyseur de gaz. Le système comprenant une pompe précédée d'une vanne d'ajustement de pression.

Les solutions connues de l'art antérieur ne permettent pas une mesure par un analyseur qui nécessite une vitesse de pompage constante à rentrée. Elles ne permettent pas non plus une détection des espèces gazeuses effectuée sans dilution. En effet dans les solutions proposées, est nécessaire d'isoler le mélange gazeux que l'on souhaite analyser, puis de le comprimer. Ce procédé ne permet pas d'obtenir un flux constant à l'entrée de l'analyseur et ne permet pas non plus d'éviter la dilution de l'échantillon.

La présente invention a pour but d'éliminer les inconvénients de l'art antérieur sans dégradation de la qualité de la mesure, en proposant un système permettant de prélever un échantillon de gaz à analyser dans une enceinte de faible volume, tout en garantissant que l'échantillon arrivera à une pression stable et un flux constant à l'entrée du dispositif d'analyse, la pression étant de préférence sensiblement de l'ordre de grandeur de la pression atmosphérique.

La présente invention a encore pour but de proposer un procédé de prélèvement et d'analyse d'un échantillon de gaz dans une enceinte de faible volume permettant d'effectuer une mesure sans provoquer de dilution de l'échantillon à analyser,

La présente invention a encore pour objet un système de prélèvement et d'analyse de gaz comprenant une enceinte contenant du gaz à pression contrôlée, un organe de prélèvement d'un échantillon de gaz communiquant avec l'atmosphère interne de l'enceinte et un analyseur de gaz incluant une pompe d'échantillon nage, caractérisé en ce que l'organe de prélèvement comprend :

- une pompe admettant un gaz à une pression Pi inférieure à la pression d'entrée de l'analyseur, et le gaz à une pression P1 supérieure à la pression d'entrée de l'analyseur, et
- un contrôleur de conductance, placé au refoulement de la pompe, produisant un flux gazeux de valeur constante et du même ordre de grandeur que la vitesse de pompage de la pompe d'échantillonnage de l'analyseur.

L'objet de la présente invention est un système de prélèvement et d'analyse de gaz comprenant une enceinte contenant du gaz, un organe de prélèvement d'un échantillon de gaz communiquant avec l'atmosphère interne de l'enceinte et un analyseur de gaz incluant une pompe d'échantillonnage.

Selon l'invention, l'organe de prélèvement d'un échantillon de gaz dans l'enceinte en vue de son analyse comporte une entrée de gaz communiquant avec l'atmosphère interne de l'enceinte à une pression Pi et une sortie de gaz à une pression Pf supérieure à Pl pour diriger le gaz vers l'analyseur de gaz. Il comprend en outre :

- une pompe admettant un gaz à une pression Pl inférieure à la pression d'entrée de l'analyseur, et refoulant le gaz à une pression P1 supérieure à la pression d'entrée de l'analyseur, et
- un contrôleur de conductance, placé au refoulement de la pompe, produisant un flux gazeux de valeur constante et du même ordre de grandeur que la vitesse de pompage de la pompe d'échantillonnage de l'analyseur,

En effet, si on connecte directement l'analyseur à l'enceinte, la pression dans le volume va rapidement baisser puisque l'on préléve le gaz. L'analyseur ne fonctionnant qu'à une pression constante, et de préférence proche de la pression atmosphérique, sa mesure sera altérée voir impossible,

La pompe a pour fonction de diriger le gaz à étudier vers l'analyseur en le comprimant, l'analyseur est donc raccordé en série au refoulement de la pompe. Ce montage permet à la pompe de prélever l'échantillon et de le comprimer simultanément à une pression P1 supérieure à la pression d'entrée de l'analyseur, et ce quelle que soit la pression à l'intérieur de l'enceinte.

De préférence la pompe est une pompe à membrane ou de toute autre technologie adaptée pour de ne pas polluer l'échantillon de gaz à analyser.

Un contrôleur de conductance muni d'une restriction, tel qu'un contrôleur de débit massique ou un contrôleur de pression est connecté en série au refoulement de la pompe, afin d'ajuster la pression ou le débit massique de manière à obtenir un flux d'une valeur stable et acceptais par l'analyseur de gaz,

De préférence l'analyseur de gaz est un spectromètre à mobilité ionique (IMS), capable dé mesurer la mobilité des ions, pour assurer la détection des traces de gaz et pour en mesurer la concentration. L'analyseur de gaz comprend une pompe d'échantillonnage, ayant une vitesse de pompage voisine de 200 ml/min, qui impose un flux constant à une pression proche de la pression atmosphérique à l'entrée de l'analyseur. L'analyseur comprend également un détecteur de gaz qui est situé en dérivation et en amont de la pompe. Dans le cas où le contrôleur de conductance, placé en sortie de la pompe de l'organe de prélèvement, est un contrôleur de débit massique, celui-ci aura un débit de l'ordre de 200 ml/min, ce qui correspond à un orifice de 0,02mm,

On pourra également utiliser tout autre type d'analyseur de gaz nécessitant un flux régulé à pression constante, comme un spectromètre à Infra Rouge à transformer de Fourier (FTIR).

Selon un mode de réalisation particulier de l'invention, l'organe de prélèvement comporte en outre un détendeur, relié au refoulement de la pompe, portant le gaz à une pression P2 inférieure à P1 mais supérieure à la pression d'entrée de l'analyseur.

Dans ce cas la pompe doit être capable de comprimer suffisamment les gaz afin d'assurer une surpression en amont du détendeur. Ainsi ce dernier pourra fonctionner correctement et garantir une surpression constante au contrôleur de conductance.

Selon un autre mode de réalisation l'organe de prélèvement comporte en outre un contrôleur de conductance auxiliaire placé avant la pompe qui lui succède. Ce contrôleur est de préférence un contrôleur de débit qui vise à s'affranchir des variations de débit ou de pression de la pompe qui le suit. Il est utilisé pour contrôler le temps de descente en pression de l'enceinte.

Avantageusement l'enceinte est étanche. En effet une fuite, même minime pourrait entraîner une dilution des gaz à analyser et rendre imprécise, voire inexacte la mesure. Les enceintes sont généralement des enceintes destinées a être mise sous vide, et de ce fait parfaitement hermétiques.

La présente invention a aussi pour objet un procédé de prélèvement d'un échantillon de gaz dans une enceinte en vue de son analyse au moyen d'un système comprenant un organe de prélèvement tel que décrit précèdemment. Le procédé comprend les étapes suivantes:

(a) on admet dans l'organe de prélèvement un gaz provenant de l'atmosphère interne de l'enceinte à une pression PI inférieure à la pression d'entrée de l'analyseur,
(b) on porte le gaz à une pression P1 supérieure à la pression Pf d'entrée de l'analyseur, et
(c) on régularise le flux du gaz à la sortie de l'organe pour l'envoyer vers l'analyseur à un flux constant.

Le flux du gaz à la sortie de l'organe doit être régulé de manière à être maintenu constant à l'arrivée de l'échantillon sur l'analyseur,

La pression P1 a une valeur variable, En effet au fur et à mesure du pompage de l'enceinte, la pression P'1 va d'abord augmenter sous l'action de la pompe, puis P1 va diminuer lorsque l'enceinte sera en partie vidée des gaz injectés vers l'analyseur,

Selon un mode de réalisation particulier de l'invention, le procédé comprend en outre, entre les étapes (b) et (c), l'étape (b') suivante :

(b') on détend le gaz à une pression P2 inférieure à P1 mais supérieure à la pression d'entrée de l'analyseur.

De préférence la pression P2 a une valeur constante, pour permettre un fonctionnement stable du contrôleur de conductance.

Selon un autre mode de réalisation, le procédé comprend en outre, entre les étapes (a) et (b), l'étape (a') suivante :

(a') on régularise le flux du gaz à l'entrée de l'organe pour l'envoyer vers la pompe.

D'autres caractéristiques et avantages de la présente invention apparaîtront à la lecture de la description qui suit d'un mode de réalisation, donné bien entendu à titre illustratif et non limitatif, et dans le dessin annexé sur lequel

- la figure 1 représente un système à atmosphère contrôlée conforme à la présente invention,
- la figure 2 montre une variante de réalisation de ce système.

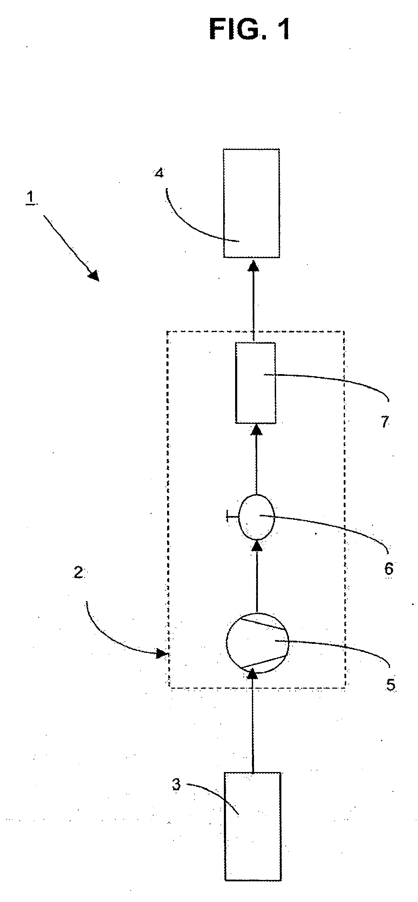

Le système **1** de la figure 1 comprend un organe de prélèvement **2** d'un échantillon de gaz dans l'atmosphère interne d'une enceinte **3** avec laquelle il communique, en vue de son analyse par un analyseur **4** qui est relié à la sortie de l'organe **2**.

L'enceinte 3 est de préférence étanche de manière à permettre une mesure précise. En effet lorsque que l'on va prélever l'échantillon de gaz, si l'enceinte 3 présente une fuite, même minime, il se produira une dilution des gaz à analyser. L'enceinte 3 contient une atmosphère interne qui peut par exemple se trouver à une pression un peu inférieure à la pression atmosphérique Patm. Le gaz à analyser est prélevé dans l'enceinte 3 par l'organe 2 au moyen d'une pompe **5** ultra-pure, de manière à éviter toute pollution du gaz à analyser. A la sortie de la pompe 5, le gaz est refoulé à une pression P1 supérieure à la pression d'entrée de l'analyseur. Un détendeur 6 permet d'imposer une pression P2, supérieure à la pression d'entrée de l'analyseur mais inférieure à P1, de préférence stable, afin d'assurer le bon fonctionnement d'un contrôleur de conductance 7, par exemple un contrôleur de débit massique qui lui est relié. Le contrôleur de débit massique 7 peut être notamment un orifice calibré ou encore une microfuite. Le contrôleur 7 est réglé au débit souhaité pour le fonctionnement optimal du système d'analyse de gaz de manière à ce que l'échantillon de gaz à analyser parvienne à l'analyseur 4 à un flux constant et à une pression finale Pf stable, et de préférence sensiblement du même ordre de grandeur que la pression atmosphérique Patm.

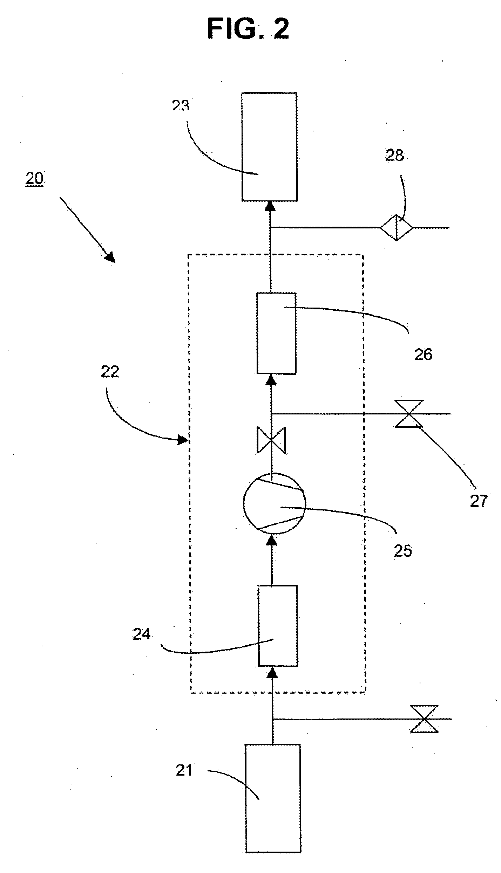

Sur la figure 2, on a représenté une variante de réalisation du système **20** selon la présente invention. Le système **20** comporte une enceinte **21** qui communique avec un organe de prélèvement **22** d'un échantillon de gaz en vue de son analyse par un analyseur **23,** L'échantillon de gaz à analyser traverse, dès sa sortie de l'enceinte **21,** un premier contrôleur de conductance **24** pour en contrôler le débit Le contrôleur auxiliaire **24** permet de s'affranchir de la variation de débit ou de pression de la pompe **25** qui lui succède. Entre la pompe **25** et le contrôleur de conductance **26** qui la suit, on dispose une vanne **27** permettant d'évacuer éventuellement une partie des gaz que l'on ne souhaite pas analyser. A la sortie de l'organe de prélèvement **22,** on place un clapet **28** au niveau duquel se produit en permanence une légère fuite contrôlée. En effet on s'arrange pour réguler le débit à la sortie du contrôleur **26** à une valeur très légérement supérieure à la vitesse de pompage de la pompe d'échantillon nage contenue dans l'analyseur de gaz **23.** Le clapet **28** a pour rôle d'évacuer la surpression qui en résulte.

**Revendications**

1. Système de prélèvement et d'analyse de gaz (1, 20) comprenant une enceinte (3, 21) contenant du gaz à pression contrôlée, un analyseur de gaz (4, 23) comprenant une pompe d'échantillonnage, et un organe de prélèvement (2, 22) d'un échantillon de gaz comportant une entrée de gaz communiquait avec l'atmosphère interne de l'enceinte à une pression Pi et une sortie de gaz à une pression Pf supérieure à Pi, pour diriger le gaz vers l'analyseur de gaz, **caractérisé en ce que** l'organe de prélèvement comprend :

   - une pompe (5, 25) admettant un gaz à une pression Pi inférieure à la pression Pf d'entrée de l'analyseur (4), et refoulant le gaz à une pression P1 supérieure à la pression Pf d'entrée de l'analyseur, et
   - un contrôleur de conductance (7, 26), placé au refoulement de la pompe (5, 25), produisant un flux gazeux de valeur constante et du même ordre de grandeur que la vitesse de pompage de la pompe d'échantillonnage de l'analyseur de gaz (4, 23),

2. Système selon la revendication 1, dans lequel la pompe est une pompe à membrane.

3. Système selon l'une des revendications 1 et 2, dans lequel le contrôleur de conductance est choisi parmi un contrôleur de débit massique et un contrôleur de pression.

4. Système selon l'une des revendications 1 à 3, dans lequel, l'analyseur de gaz est un spectromètre à mobilité ionique (IMS).

5. Système selon l'une des revendications 1 à 3, dans lequel l'analyseur de gaz est un spectromètre à Infra Rouge à transformer de Fourier (FTIR).

6. Système selon l'une des revendications précédentes, comportant en outre un détendeur (6), relié au refoulement de la pompe (5), portant le gaz à une pression P2 inférieure à P1 mais supérieure à la pression Pf d'entrée de l'analyseur.

7. Système selon l'une des revendications précédentes, comportant en outre un contrôleur de conductance auxiliaire (24) placé avant la pompe.

8. Système selon l'une des revendications précédentes, dans lequel l'enceinte est étanche.

9. Procédé de prélèvement d'un échantillon de gaz dans une enceinte au moyen d'un système de prélèvement et d'analyse selon l'une des revendications précédentes, comprenant les étapes suivantes :

   (a) on admet dans l'organe de prélèvement un gaz provenant de l'atmosphère interne de l'enceinte à une pression Pi inférieure à la pression Pf d'entrée de l'analyseur,
   (b) on porte le gaz à une pression P1 supérieure à la pression Pf d'entrée de l'analyseur, et
   (c) on régularise le flux du gaz à la sortie de l'organe pour l'envoyer vers l'analyseur à un flux constant.

10. Procédé selon la revendication 9, comprenant en outre, entre les étapes (b) et (c), l'étape (b') suivante :

   (b') on détend le gaz à une pression P2 inférieure à P1 mais supérieure à la pression Pf d'entrée de l'analyseur.

11. Procédé selon la revendication 10, dans lequel la pression P2 a une valeur constante.

**12.** Procédé selon l'une des revendications 9 à 11, comprenant en outre, entre les étapes (a) et (b), l'étape (a') suivante :

(a') on régularise le flux du gaz à l'entrée de l'organe de prélèvement pour l'envoyer vers la pompe.

**13.** Procédé selon l'une des revendications 9 à 12, dans lequel la pression Pf d'entrée dans l'analyseur de gaz est sensiblement du même ordure de grandeur que la pression atmosphérique.

**Claims**

**1.** System for sampling and analysing gas (1, 20) comprising a chamber (3, 21) containing gas at controlled pressure, a gas analyser (4, 23) comprising a sampling pump, and a member (2, 22) for sampling a gas sample comprising a gas inlet communicating with the internal atmosphere of the chamber at a pressure Pi and a gas outlet at a pressure Pf greater than Pi, for directing the gas towards the gas analyser, **characterized in that** the sampling member comprises:

- a pump (5, 25) admitting a gas at a pressure Pi less than the inlet pressure Pf of the analyser (4), and discharging the gas at a pressure P1 greater than the inlet pressure Pf of the analyser, and
- a conductance controller (7, 26), placed at the discharge of the pump (5, 25), producing a gaseous flow of constant value and of the same order of magnitude as the pumping speed of the sampling pump of the gas analyser (4, 23).

**2.** System according to Claim 1, in which the pump is a membrane pump.

**3.** System according to one of Claims 1 and 2, in which the conductance controller is chosen from a mass flow rate controller and a pressure controller.

**4.** System according to one of Claims 1 to 3, in which the gas analyser is an ionic mobility spectrometer (IMS).

**5.** System according to one of Claims 1 to 3, in which the gas analyser is a Fourier transform infrared spectrometer (FTIR).

**6.** System according to one of the preceding claims, also comprising an expansion valve (6), connected to the discharge of the pump (5), raising the gas to a pressure P2 less than P1 but greater than the inlet pressure Pf of the analyser.

**7.** System according to one of the preceding claims, also comprising an auxiliary conductance controller (24) placed before the pump.

**8.** System according to one of the preceding claims, in which the chamber is seal-tight.

**9.** Method of sampling a gas sample in a chamber by means of a sampling and analysis system according to one of the preceding claims, comprising the following steps:

(a) a gas originating from the internal atmosphere of the chamber is admitted into the gas sampling member at a pressure Pi less than the inlet pressure Pf of the analyser,
(b) the gas is raised to a pressure P1 greater than the inlet pressure Pf of the analyser, and
(c) the gas flow is regulated at the outlet of the member so it can be sent to the analyser with a constant flow.

**10.** Method according to Claim 9, also comprising, between the steps (b) and (c), the following step (b'):

(b') the gas is expanded to a pressure P2 less than P1 but greater than the inlet pressure Pf of the analyser.

**11.** Method according to Claim 10, in which the pressure P2 has a constant value.

**12.** Method according to one of Claims 9 to 11, also comprising, between the steps (a) and (b), the following step (a') :

(a') the gas flow is regulated at the inlet of the sampling member so it can be sent to the pump.

**13.** Method according to one of Claims 9 to 12, in which the inlet pressure Pf in the gas analyser is substantially of the same order of magnitude as atmospheric pressure.

**Patentansprüche**

**1.** System zur Entnahme und Analyse von Gas (1, 20), mit einem Behälter (3, 21), der ein Gas auf einem gesteuerten Druck enthält, einem Gasanalysator (4, 23), der eine Probennahmepumpe enthält, und einem Entnahmeorgan (2, 22) für eine Gasprobe, das einen Gaseinlass, der mit der inneren Atmosphäre des Behälters auf einem Druck Pi kommuniziert, und einen Gasauslass auf einem Druck Pf größer als Pi enthält, um das Gas zum Gasanalysator zu leiten, **dadurch gekennzeichnet, dass** das Entnahmeorgan Folgendes enthält:

- eine Pumpe (5, 25), um ein Gas auf einem Druck Pi kleiner als der Eingangsdruck Pf des Analysators (4) einzulassen und um das Gas auf einem Druck P1 größer als der Eingangsdruck Pf des Analysators zu fördern, und
- eine Leitungssteuereinheit (7, 26), die auf der Förderseite der Pumpe (5, 25) angeordnet ist und einen Gasstrom mit konstantem Wert und in derselben Größenordnung wie die Pumpgeschwindigkeit der Probennahmepumpe des Gasanalysators (4, 23) erzeugt.

**2.** System nach Anspruch 1, wobei die Pumpe eine Membranpumpe ist.

**3.** System nach einem der Ansprüche 1 und 2, wobei die Leitungssteuereinheit aus einer Massendurchsatz-Steuereinheit und einer Drucksteuereinheit gewählt ist.

**4.** System nach einem der Ansprüche 1 bis 3, wobei der Gasanalysator ein Ionenbeweglichkeits-Spektrometer (IMS) ist.

**5.** System nach einem der Ansprüche 1 bis 3, wobei der Gasanalysator ein Fouriertransformations-Infrarotspektrometer (FTIR) ist.

**6.** System nach einem der vorhergehenden Ansprüche, das außerdem einen Druckreduzierer (6) enthält, der mit der Förderseite der Pumpe (5) verbunden ist und das Gas auf einem Druck P2 kleiner als P1, jedoch größer als der Eingangsdruck Pf des Analysators, hält.

**7.** System nach einem der vorhergehenden Ansprüche, das außerdem eine Hilfsleitungssteuereinheit (24), die vor der Pumpe angeordnet ist, enthält.

**8.** System nach einem der vorhergehenden Ansprüche, wobei der Behälter dicht ist.

**9.** Verfahren zum Entnehmen einer Gasprobe in einem Behälter mittels eines Entnahme- und Analysesystems nach einem der vorhergehenden Ansprüche, das die folgenden Schritte enthält:

(a) Einlassen eines Gases von der inneren Atmosphäre des Behälters auf einem Druck Pi kleiner als der Eingangsdruck Pf des Analysators in das Entnahmeorgan,
(b) Halten des Gases auf einem Druck P1 größer als der Eingangsdruck Pf des Analysators und
(c) Regulieren des Gasstroms am Ausgang des Organs, um es als einen konstanten Strom zum Analysator zu schicken.

**10.** Verfahren nach Anspruch 9, das außerdem zwischen den Schritten (b) und (c) den folgenden Schritt (b') enthält:

(b') Entspannen des Gases auf einen Druck P2 kleiner als P1, jedoch größer als der Eingangsdruck Pf des Analysators.

**11.** Verfahren nach Anspruch 10, wobei der Druck P2 einen konstanten Wert hat.

**12.** Verfahren nach einem der Ansprüche 9 bis 11, das außerdem zwischen den Schritten (a) und (b) den folgenden Schritt (a') enthält:

(a') Regulieren des Gasstroms am Eingang des Entnahmeorgans, um es zur Pumpe zu schicken.

13. Verfahren nach einem der Ansprüche 9 bis 12, wobei der Eingangsdruck Pf des Gasanalysators im Wesentlichen in der gleichen Größenordnung wie der Atmosphärendruck liegt.

# FIG. 1

# FIG. 2

## RÉFÉRENCES CITÉES DANS LA DESCRIPTION

**Documents brevets cités dans la description**

- US 4042333 A
- US 20040035183 A
- DE 3718224
- DE 202005017612 U